# EUROPEAN PATENT APPLICATION

(11) **EP 0 930 452 A1**
(43) Date of publication of application: **21.07.1999**
(21) Application number: 98100729.7
(22) Date of filing: 16.01.1998
(51) Int. Cl.: F16J 15/08, F16J 15/02

(54) **Gasket**

(71) Applicant: Daiso Corporation, Kitakyushu-City, Fukuoka 805 (JP)
(72) Inventor: Otsuji, Hiroshi, Higashi-ku, Kitakyushu-city, Fukuoka 805 (JP); Nagawa, Masato, Kitakyushu-city, Fukuoka, 802 (JP)
(74) Representative: Diehl, Hermann, Dr. Dipl.-Phys.

(57) **Abstract**

There is provided a gasket including a gasket body (1a) which is formed axially thereof with a through-hole (2), and further with an annular groove (4a) to thereby define contact portions (5a) between the annular groove (4a) and opposite contact surfaces (3a). The annular groove (4a) extends from an inner wall (2a) of the through-hole (2) towards a side surface (3b) of the gasket body (1a). A projection (6) having a semicircular cross-section is formed on each one of the contact surfaces (3a) above the annular groove (4a) so that the projection (6) entirely surrounds the through-hole (2). In use, the gasket is sandwiched between flanges. When compressed between flanges, the contact portions (5a) are resiliently deformed, and resultingly, a counter-force exerted on the contact portions (5a) makes the contact portions (5a) and hence the projections (6) tightly contact the flanges. Thus, hermetic sealing is established between the gasket and flanges.

## Description

The invention relates to a novel gasket.

There has been widely used an O-ring and a packing as a gasket for preventing fluid leakage and entrance of dust. For instance, various structures employing a gasket for preventing fluid leakage have been suggested in Japanese Unexamined Utility Model Publications Nos. 60-58958, 61-109980 and 8-1500, and Japanese Unexamined Patent Publications Nos. 6-505788 and 9-60731.

However, an O-ring and a packing would be readily broken in high-pressure use. For instance, if an O-ring is used in a pressure over a critical pressure, an O-ring is forced to move out of a groove, and as a result broken soon. Furthermore, since an O-ring is fit into a groove in use, fluid tends to gather in the groove, resulting in propagation of various germs. The same applies to a packing. If a packing does not make hermetic contact with a flange because of irregularity at a surface of the flange, fluid tends to gather between the packing and the flange, resulting in propagation of germs.

In addition, the structures suggested in the above listed Publications are quite complicated, but cannot provide sufficient sealing.

The present invention intends to overcome the above problems. The object is solved by the gasket according to independent claims 1, 14 and 15.

Further advantages, features, aspects and details of the invention are evident from the dependent claims, the description and the accompanying drawings. The claims are intended to be understood as a first non-limiting approach, of defining the invention in general terms.

The present invention generally relates to gaskets. In particular it relates to gaskets to be sandwiched between flanges for preventing fluid leakage.

Therefore, it is an object of the present invention to provide a novel gasket having a simple structure. It also ensures high hermetic sealing and/or capable of withstanding a high fluid pressure and/or eliminates fluid gathering to thereby prevent propagation of germs.

There is provided a gasket including a gasket body having a uniform thickness and opposite contact surfaces. The gasket body is formed axially thereof with a through-hole, and further with at least one annular groove to thereby define at least one contact portion between the annular groove and the opposite contact surfaces. The annular groove extends either from an inner wall of the through-hole towards a side surface of the gasket body or from the side surface towards the inner wall of the through-hole. Preferably at least one projection is formed on at least one of the opposite contact surfaces above the annular groove so that the projection entirely surrounds the through-hole.

In use, the gasket is sandwiched between surfaces such as flanges. When compressed between flanges, the contact portion is resiliently deformed, and as a result, a counter-force exerted on the contact portion causes the contact portion to tightly contact the flanges. In a preferred embodiment comprising projections, these will tightly contact the flanges. Thus, there is established hermetic sealing between the gasket and the flanges.

In addition, if the gasket is employed for connecting tubes with each other in which fluid such as water, vapor and gas flows, by being sandwiched between the tubes, fluid pressure uniformly acts on an inner wall of the annular groove extending from an inner wall of the through-hole towards a side surface of the gasket body, according to Pascal's principle. The fluid pressure enhances the counter-force, which ensures that the contact portions and/or projection makes more tight contact with the flanges. The higher the fluid pressure is, the higher the counter-force becomes.

The gasket including the annular groove extending from the side surface towards the inner wall of the through-hole ensures that the through-hole of the gasket body is in direct communication with tubes which are to be connected to each other through the gasket. Hence, fluid flows directly tube to tube through the through-hole of the gasket body, ensuring prevention of fluid gathering which was found in a conventional O-ring.

The gasket body and the through-hole may be designed to have a circular, oval, triangular, rectangular or polygonal cross-section. Preferably, the gasket body is formed to be ring-shaped.

The gasket may be made of metal such as malleable cast iron, carbon steel, alloy steel, stainless steel, aluminum, brass and copper, or synthetic resin such as hard vinyl chloride, polyethylene, polyamide, polyester and polysulfone. As an alternative, the gasket may be made of ceramics or woods. The gasket may be made of any material, if the material has resiliency.

It is preferable that annular groove has a width greater than a deformation of the resiliently deformable contact portion. A depth of the annular groove is dependent on material of which the gasket is made, a shape of the contact portion, and the number of the annular grooves.

The projection preferably has a semicircular cross-section. It should be noted that the projection may have other shaped cross-section such as a triangular, trapezoidal, or rectangular cross-section. A height of the projection depends on material of which the gasket is made, a shape and/or a thickness of the contact portion, and a width and a depth of the annular groove.

It is preferable that the projection is an annular projection coaxial with the through-hole. The gasket body may be formed with a plurality of projections, in which case it is preferable that a projection disposed closer to the through-hole has a greater or smaller height.

It is preferable that the gasket body is formed with two contact portions, one of which inwardly extends from the inner wall of the through-hole or outwardly extends from the side surface.

For instance, the above-mentioned one of contact portions may be designed to be upwardly inclined, in which case it is not necessary to form the projection thereon. As an alternative, the one of contact portions may be designed to be upwardly inclined with the projection being as it is. The one of contact portions may be designed to have an increasing, decreasing or uniform thickness. The through-hole of the gasket body may be designed to have an arcuate inner wall to define the one of contact portions.

The contact portion may be designed to have an increasing or decreasing thickness from the through-hole towards the side surface. The contact portion may have a rounded corner facing the annular groove.

It is preferred but not necessary that the contact portions have the same thickness.

It is preferable that the gasket body is formed further with a passage by which the through-hole is in fluid communication with the side surface of the gasket body.

It is preferable that the annular groove is tapered so that the annular groove has an increasing or decreasing width from the through-hole towards the side surface of the gasket body, in which case, the annular groove preferably has a rounded bottom. The taper angle of the annular groove is preferably in the range of 0.1 degree to 30 degrees both inclusive, and more preferably in the range of 0.6 degrees to 10 degrees both inclusive.

There is further provided a gasket including a gasket body having a uniform thickness and opposite contact surfaces. The gasket body is formed axially thereof with a through-hole, and further with at least one annular groove to thereby define at least one contact portion between the annular groove and the opposite contact surfaces. The annular groove extends either from an inner wall of the through-hole towards a side surface of the gasket body or from the side surface towards the inner wall of the through-hole. The contact portion is inclined so that a distal end thereof is disposed higher than the opposite contact surfaces.

Unless a distal end of the contact portion is disposed higher than the contact surfaces of the gasket body, the contact portion may be designed to have an increasing, decreasing or uniform thickness.

It is preferable that the contact portion is inclined so that an angle formed between the contact surfaces and the inclined contact portion is in the range of 170 degrees to 179.5 degrees both inclusive.

At least one projection may be formed on at least one of the opposite contact surfaces above the annular groove so that the projection entirely surrounds the through-hole.

It is preferable that the contact portion has a rounded or chamfered upper edge.

There is still further provided a gasket including a gasket body having a uniform thickness and opposite contact surfaces, the gasket body being formed axially thereof with a through-hole, the gasket body being formed with at least one annular groove to thereby define at least one contact portion between the annular groove and the opposite contact surfaces, the annular groove extending from an inner wall of the through-hole towards a side surface of the gasket body or extending from the side surface towards the inner wall of the through-hole, the contact portion having a rounded or chamfered upper edge.

The above-mentioned gasket preferably includes no projection unlike the firstly mentioned gasket. Instead, the above-mentioned gasket is designed to have a contact portion having a rounded or chamfered upper edge. In use, the gasket is sandwiched between surfaces such as flanges. When compressed between flanges, the contact portion is resiliently deformed, and as a result, a counter-force exerted on the contact portion makes the contact portion tightly contact the flanges. The contact portion contacts at a rounded or chamfered upper edge thereof with the flanges. Thus, there is established hermetic sealing between the gasket and the flanges. Namely, the rounded or chamfered upper edge acts as a projection in the firstly mentioned gasket.

There is provided a gasket including a gasket body which is formed axially thereof with a through-hole, and further with an annular groove to thereby define contact portions between the annular groove and opposite contact surfaces. The annular groove extends from an inner wall of the through-hole towards a side surface of the gasket body. A projection having a semicircular cross-section is formed on each one of the contact surfaces above the annular groove so that the projection entirely surrounds the through-hole. In use, the gasket is sandwiched between flanges. When compressed between flanges, the contact portions are resiliently deformed, and resultingly, a counter-force exerted on the contact portions makes the contact portions and hence the projections tightly contact the flanges. Thus, hermetic sealing is established between the gasket and flanges.

The invention will be better understood by reference to the following description of embodiments of the invention taken in conjunction with the accompanying drawings, wherein
Fig. 1A is a perspective view of a gasket in accordance with the first embodiment of the invention.
Fig. 1B is a cross-sectional view taken along the line IB-IB in Fig. 1A.
Fig. 2A is a perspective view of a gasket in accordance with a variation of the first embodiment.
Fig. 2B is a cross-sectional view taken along the line IIB-IIB in Fig. 2A.
Fig. 3. is a perspective view illustrating the gasket illustrated in Figs. 1A and 2A in use.
Fig. 4 is a cross-sectional view illustrating that the gasket illustrated in Fig. 1A is under sealing test.
Fig. 5 is a graph showing a relation between fluid pressure and a contact force of a contact portion in the gasket illustrated in Fig. 1A.
Fig. 6 is a cross-sectional view illustrating that the gasket illustrated in Fig. 2A is under sealing test.
Fig. 7 is a graph showing a relation between fluid pressure and a contact force of a contact portion in the gasket illustrated in Fig. 2A.
Fig. 8 is a cross-sectional view of a gasket in accordance with the second embodiment of the invention.
Fig. 9 is a cross-sectional view of a gasket in accordance with a variant of the second embodiment.
Fig. 10 is a cross-sectional view of a gasket in accordance with the third embodiment of the invention.
Fig. 11 is a cross-sectional view of a gasket in accordance with a variant of the third embodiment.
Fig. 12 is a cross-sectional view of a gasket in accordance with the fourth embodiment of the invention.
Fig. 13 is a cross-sectional view of a gasket in accordance with a variant of the fourth embodiment.
Fig. 14 is a cross-sectional view of a gasket in accordance with the fifth embodiment.
Fig. 15A is a partial cross-sectional view of the first variant of the fifth embodiment.
Fig. 15B is a partial cross-sectional view of the second variant of the fifth embodiment.
Fig. 15C is a partial cross-sectional view of the third variant of the fifth embodiment.
Fig. 16 is a cross-sectional view of a gasket in accordance with a variant of the fifth embodiment.
Fig. 17 is a cross-sectional view of a gasket in accordance with the sixth embodiment.
Fig. 18 is a cross-sectional view of a gasket in accordance with a variant of the sixth embodiment.

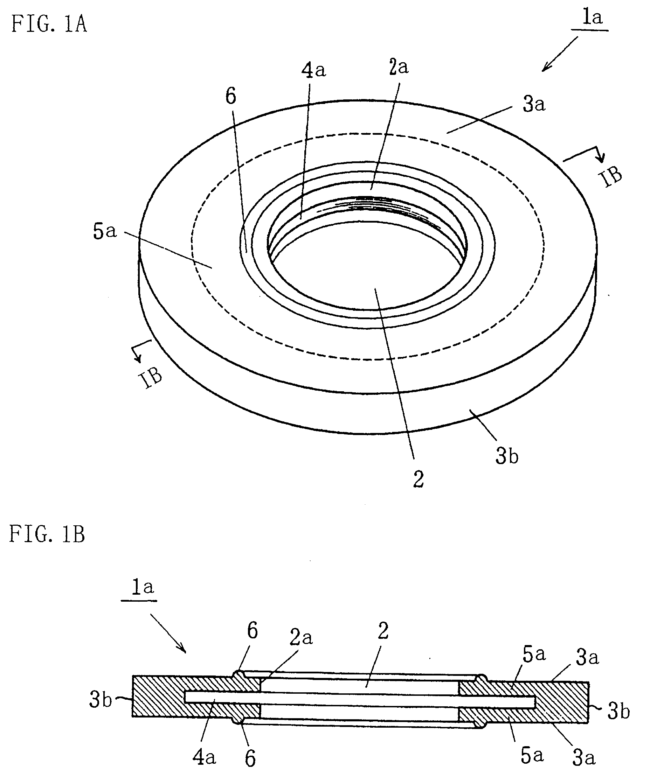

With reference to Figs. 1A and 1B, a gasket in accordance with the first embodiment includes a ring-shaped gasket body 1a having a uniform thickness. The gasket body 1a is formed centrally and axially with a through-hole 2, and is designed to have upper and lower contact surfaces 3a at which the gasket body 1a makes contact with flanges, as mentioned later.

The gasket body 1a is formed with an annular groove 4a coaxial with the through-hole 2 and extending from an inner wall 2a of the through-hole 2 towards a side surface 3b of the gasket body 1a. The annular groove 4a defines two contact portions 5a between the annular groove 4a itself and the opposite surfaces 3a of the gasket body 1a. The contact portions 5a have the same thickness.

A projection 6 is formed on each one of the contact portions 5a. In other words, the projection is disposed on the surfaces 3a above or below the annular groove 4a. As illustrated in Fig. 1B, the projection 6 has a semicircular cross-section. In addition, as illustrated in Fig. 1A, the projection 6 is an annular projection coaxial with the through-hole 2, and hence the projection 6 entirely surrounds the through-hole 2.

A depth of the annular groove 4a is determined in dependence on resiliency of material of which the gasket body 1 is made, and shape of the contact portions 5a. A depth of the annular groove 4a is preferably in the range of 2 mm to 15 mm, and more preferably in the range of 3 mm to 10 mm. If the depth is smaller than 2 mm, it starts to become difficult for the contact portions 5a to have a great counter-force, and if the depth is greater than 15 mm, it starts to become difficult to form the annular groove 4a with high accuracy. An opening width of the annular groove 4a is designed to be greater than total deformation of the contact portions 5a to ensure hermetic sealing between the gasket and flanges.

The projection 6 is designed to have a height determined in dependence on resiliency of material of which the gasket body 1a is made, and shape of the contact portions 5a. The height of the projection 6 is preferably in the range of 0.1 mm to 1.5 mm, and more preferably in the range of 0.15 mm to 0.8 mm.

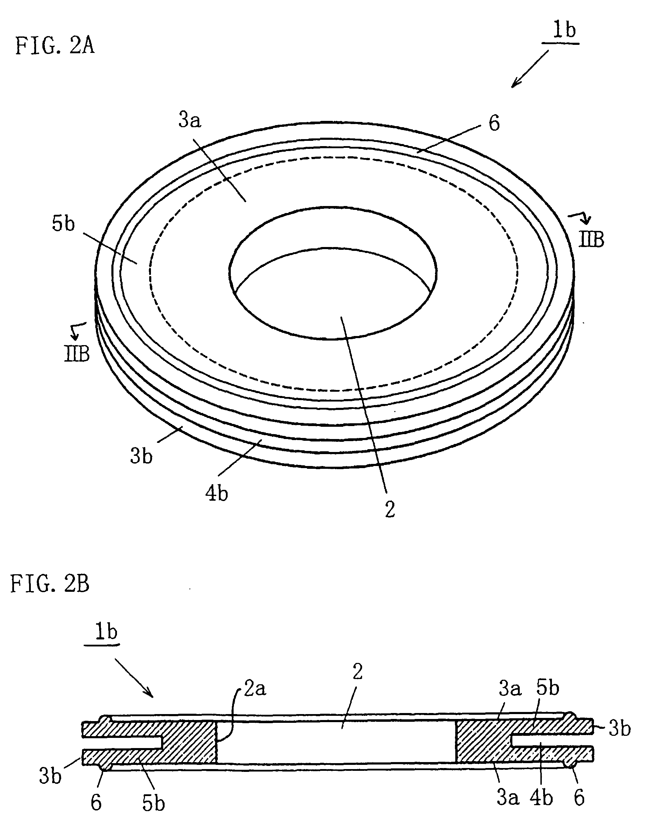

Figs. 2A and 2B illustrates a gasket in accordance with a variant of the above-mentioned first embodiment. The illustrated variant is different from the gasket illustrated in Figs. 1A and 1B with respect to an annular groove. That is, an annular groove 4b in the variant extends from the side surface 3b of a gasket body 1b towards the central through-hole 2. Accordingly, contact portions 5b defined between the annular groove 4b and the opposite surfaces 3a extend in an direction opposite to that of the contact portions 5a of the first embodiment. The other elements are the same as the gasket in accordance with the first embodiment. For instance, the projection 6 is formed on each one of the surfaces 3a above or below the annular groove 4b in the same way as the gasket illustrated in Figs. 1A and 1B.

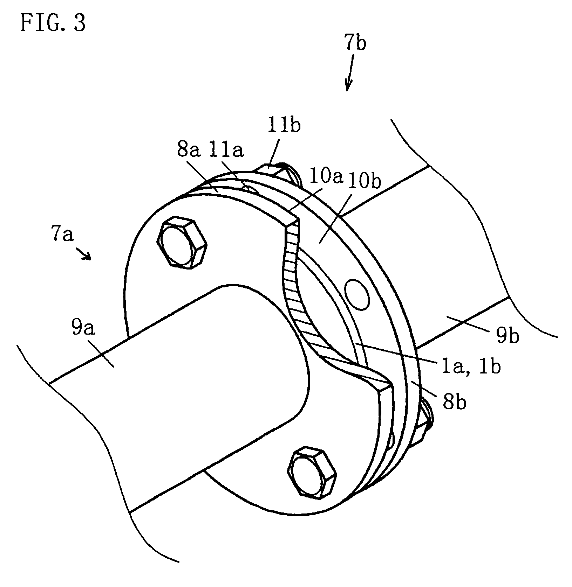

Hereinbelow how the gaskets in accordance with both the first embodiment and the variant thereof are used is explained with reference to Fig. 3.

As illustrated in Fig. 3, flange tubes 7a and 7b include Ranges 8a and 8b, and tubes 9a and 9b through which pressure fluid such as liquid, vapor, gas and slurry flows. The flanges 8a and 8b have contact surfaces 10a and 10b at which the flanges 8a and 8b are connected with each other through a gasket. The flange tubes 7a and 7b are connected with each other by means of bolts 11a and nuts 11b.

The gasket in accordance with the first embodiment or the variant thereof is arranged as follows. First, the gasket is interposed between the contact surfaces 10a and 10b of the flanges 8a and 8b. Then, the flange tubes 7a and 7b are connected with each other by means of the bolts 11a and nuts 11b.

As the flanges 8a and 8b are fastened tightly with the bolts 11a and nuts 11b, the contact portions 5a or 5b of the gasket body 1a or 1b are resiliently deformed. The resilient deformation of the contact portions 5a or 5b generates a counter-force in the contact portions 5a or 5b. As a result, the projection 6 makes close contact with the contact surfaces 10a and 10b by virtue of the thus generated counter-force. The bolts 11a and nuts 11b are fastened until the contact surfaces 3a of the gasket body 1a or 1b make close contact with the contact surfaces 10a and 10b of the flanges 8a and 8b.

When the gasket illustrated in Figs. 1A and 1B is to be used, fluid pressure also facilitates close contact between the projection 6 and the contact surfaces 10a, 10b. When fluid such as water, gas and slurry is allowed to flow in the tubes 9a and 9b, fluid pressure uniformly exerts on the annular groove 4a of the gasket body 1a in accordance with Pascal's principle. The counter-force exerted on the contact portions 5a and the fluid pressure acting on the annular groove 4a cooperate with each other to thereby cause the projection 6 to make tight contact with the contact surfaces 10a and 10b of the flanges 8a and 8b. Thus, the flanges 8a and 8b are hermetically sealed by means of the gasket.

When the gasket illustrated in Figs. 2A and 2B is to be used, if the tubes 9a and 9b are under reduced pressure, the contact portions 5b of the gasket body 1b are attracted towards the contact surfaces 10a and 10b of the flanges 8a and 8b. In addition, atmospheric pressure exerts on the annular groove 4b. Thus, the counter-force exerted on the contact portions 5b, attractive force generated by vacuum between the contact surfaces 3a of the gasket body 1b and the contact surfaces 10a, 10b of the flanges 8a, 8b, and atmospheric pressure acting on the annular groove 4b cooperate with each other to thereby cause the projection 6 to make tight contact with the contact surfaces 10a and 10b of the flanges 8a and 8b. Thus, the flanges 8a and 8b are hermetically sealed by means of the gasket.

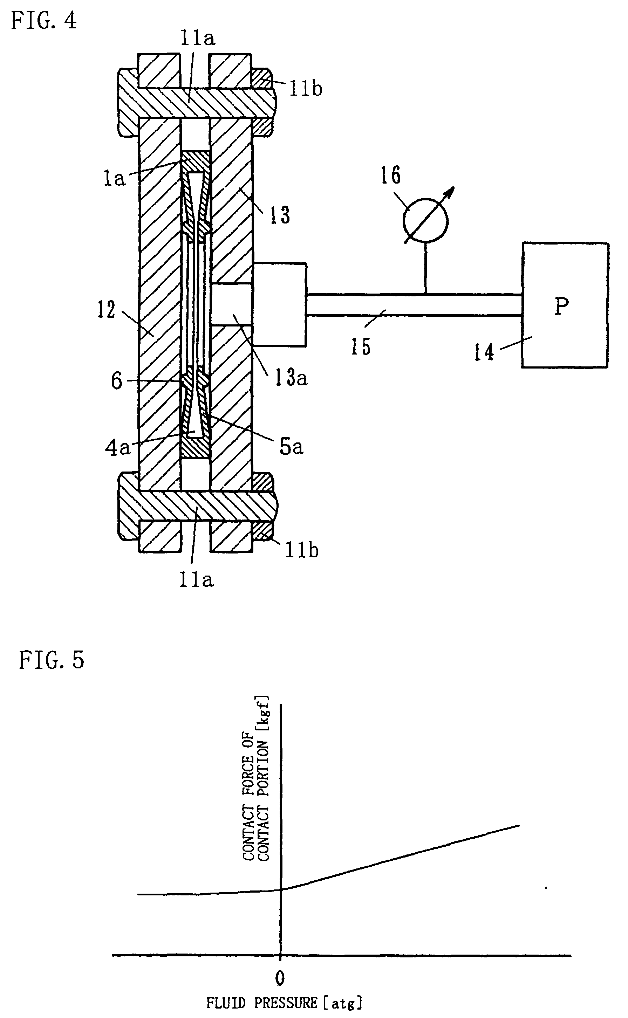

Hereinbelow sealing performance of the gasket illustrated in Figs. 1A and 1B is explained with reference to Figs. 4 and 5.

Fig. 4 illustrates an apparatus for testing sealing performance of a gasket. A gasket under test is sandwiched between first and second flanges 12 and 13 by means of four pairs of the bolts 11a and nuts 11b. The first flange 12 is a blind flange, namely, a flange with no through-holes, whereas the second flange 13 has a central through-hole 13a. A water pump 14 is in communication with the through-hole 13a of the second flange 13 through a tube 15. A pressure meter 16 is connected to the tube 15 for measuring a pressure of fluid flowing in the tube 15.

The gasket under test had following dimensions.
Height of the projection 6: 0.2 mm
Curvature of the projection 6: 2 mm
Thickness of the contact portion 5a: 2 mm
Width of the annular groove 4a: 1.0 mm
Thickness of the gasket body 1a: 5.0 mm
After the gasket under test was set between the flanges 12 and 13, the water pump 14 started to supply water to the gasket, and continued supplying water at 30 atg of hydraulic pressure for 10 minutes.

The result was that there was found no fluid leakage between the gasket and the flanges 12 and 13. Then, after the apparatus was disassembled and assembled again, the same test was carried out. The result was the same, namely, there was found no fluid leakage between the gasket and the flanges 12 and 13. Disassembling and assembling the apparatus was repeated totally five times. After each time the apparatus was disassembled and assembled, the same test was carried out. The result was that there was found no fluid leakage between the gasket and the flanges 12 and 13.

Then, the gasket having the following dimensions was also tested.
Height of the projection 6: 0.2 mm
Curvature of the projection 6: 2 mm
Thickness of the contact portion 5a: 4 mm
Width of the annular groove 4a: 1.0 mm
Thickness of the gasket body 1a: 9.0 mm
The gasket was tested in the same manner except that the hydraulic pressure was set at 60 atg. The result was that there was found no fluid leakage between the gasket and the flanges 12 and 13.

In order to verify the superior sealing performance of the gasket in accordance with the fist embodiment, illustrated in Figs. 1A and 1B, the inventors had asked Fukuoka Prefecture Industrial Technology Center, which is an official, non-profitable organization, to test the gasket. The gasket was tested under 8 MPa (80 kg/cm²) of fluid pressure for 10 minutes. The result was that no fluid leakage was found between the gasket and flanges. Thus, the superior sealing performance of the gasket was officially verified.

Hereinbelow is explained a relation between fluid pressure and a contact force exerting on the contact portions 5a of the gasket body 1a. Fig. 5 shows the relation, where an axis of ordinate indicates a counter-force exerting on the contact portions 5a, and an axis of abscissa indicates a pressure of fluid.

As shown in Fig. 5, when fluid pressure is equal to zero atg, only the counter-force generated due to resilient deformation of the contact portions 5a exerts on the contact portions 5a as the contact force. As fluid pressure increases, greater fluid pressure acts on the annular groove 4a in accordance with Pascal's principle, resulting in that the contact force is increased.

When reduced pressure is applied to the gasket, a pressure acting on the annular groove 4a is smaller than a pressure between the contact surfaces of the contact portion 5a and the flanges 12, 13. Hence, the contact force is decreased.

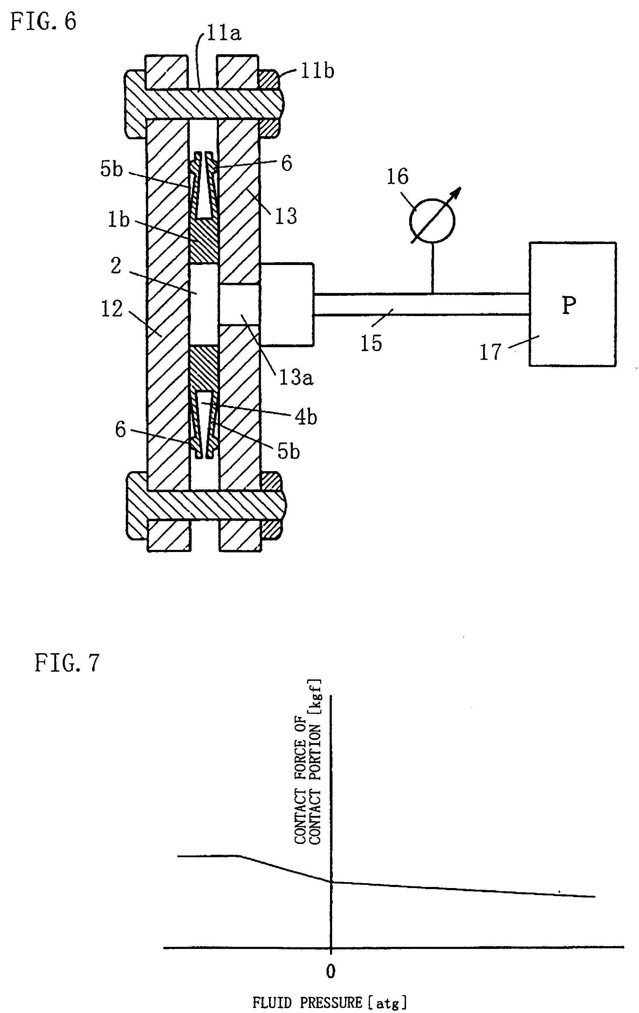

Hereinbelow sealing performance of the gasket illustrated in Figs. 2A and 2B is explained with reference to Figs. 6 and 7.

Fig. 6 illustrates an apparatus for testing sealing performance of a gasket. The illustrated apparatus is the same as the test apparatus illustrated in Fig. 4 except that a vacuum pump 17 is used in place of the water pump 14.

The gasket under test had following dimensions.
Height of the projection 6: 0.2 mm
Curvature of the projection 6: 2 mm
Thickness of the contact portion 5a: 2 mm
Width of the annular groove 4a: 1.0 mm
Thickness of the gasket body 1a: 5.0 mm
After the gasket under test was set between the flanges 12 and 13, the vacuum pump 17 applies reduced pressure of 100 Torr to the gasket.

The result was that there was found no fluid leakage between the gasket and the flanges 12 and 13. Then, after the apparatus was disassembled and assembled again, the same test was carried out. The result was the same, namely, there was found no fluid leakage between the gasket and the flanges 12 and 13. Disassembling and assembling the apparatus was repeated totally five times. After each time the apparatus was disassembled and assembled, the same test was carried out. The result was that there was found no fluid leakage between the gasket and the flanges 12 and 13.

Hereinbelow is explained a relation between fluid pressure and a contact force exerting on the contact portions 5b of the gasket body 1b. As shown in Fig. 7, when fluid pressure is equal to zero atg, only the counter-force generated due to resilient deformation of the contact portions 5b exerts on the contact portions 5b as the contact force. As fluid pressure decrease, atmospheric pressure acting on the annular groove 4b becomes greater than a pressure between the contact portions 5b and the flanges 12, 13. Thus, the contact portion 5b and hence the projection 6 is caused to make more tight contact with the flanges 12 and 13. It was found that when a pressure between the flanges 12 and 13 was increased beyond a certain pressure, a pressure acting on the contact portion 5b becomes smaller than a pressure between the contact portions 5b and the flanges 12, 13, and hence the contact force of the contact portion 5b was decreased.

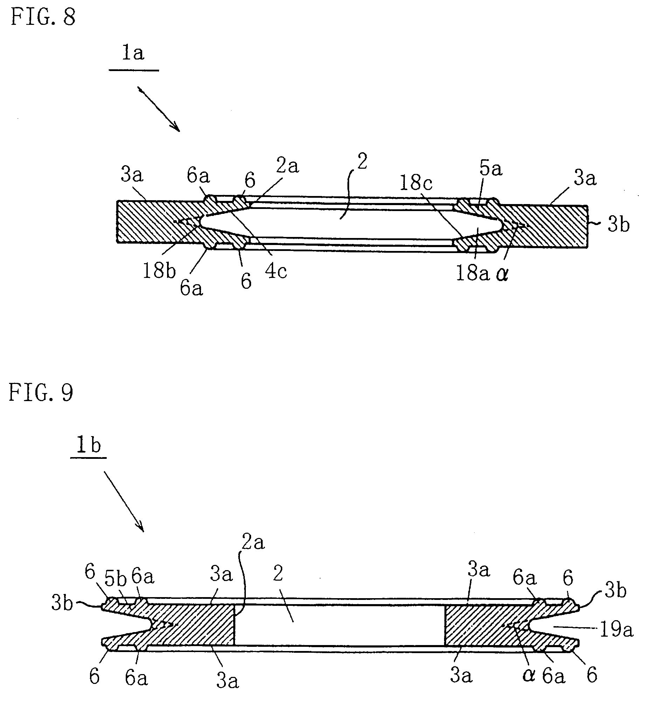

Fig. 8 illustrates a gasket in accordance with the second embodiment of the present invention. Components or elements corresponding to those of the gasket in accordance with the first embodiment, illustrated in Figs. 1A and 1B, have been provided with the same reference numerals. The illustrated gasket is different from the gasket illustrated in Figs. 1A and 1B in that an annular groove 18a is tapered so that the annular groove 18a has a decreasing width from the through-hole 2 towards the side surface 3b of the gasket body 1a. The annular groove 18a having a tapered inner surface ensures a counter-force at the bottom 18b of the contact portions 5a. A taper angle α of the annular groove 18a is preferably in the range of 0.1 degree to 30 degrees, and more preferably in the range of 0.6 degrees to 10 degrees. If the taper angle α is smaller than 0.1 degree, it would be rather difficult to form the annular groove 18a with high accuracy, and if the taper angle α is greater than 30 degrees, the contact portions 5a would be quite thin at the inner wall 2a of the through-hole 2, and hence would be weakened in mechanical strength.

The annular groove 18a is designed to have a rounded bottom 18b. The rounded bottom 18b ensures that when the gasket is sandwiched between flanges, the contact portions 5a can be resiliently deformed with a smaller force than that of the first embodiment, and that local metal fatigue of the bottom of the annular groove 18a can be prevented.

The illustrated gasket is different from the gasket in accordance with the first embodiment further in that two projections 6 and 6a are formed on each one of the contact surfaces 5a. The projections 6 and 6a are coaxial with the through-hole 2, and hence both surround the through-hole 2. The projections 6 and 6a have the same semicircular cross-section, and hence have common diameter and height.

The projections 6 and 6a may be designed to have different diameters and heights. As an alternative, the projection 6 disposed closer to the through-hole 2 may be designed to be higher than the projection 6a disposed more remote from the through-hole 2. When the contact portions 5a are resiliently deformed, the projection 6 is forced to move more downwardly than the projection 6a. Hence, by designing the projection 6 to have a greater height than the projection 6a, it is possible that both the projections 6 and 6a make close contact with contact surfaces of flanges.

When the gasket body 1a has a relatively great diameter, three or more projections may be formed on each one of the contact portions 5a.

Fig. 9 illustrates a variant of the gasket in accordance with the second embodiment, illustrated in Fig. 8. The illustrated variant is almost the same as the gasket illustrated in Fig. 8, but is different only in that a tapered annular groove 19a extends from the side surface 3b of the gasket body 1b towards the through-hole 2. The annular groove 19a has a width decreasing from the side surface 3b towards the through-hole 2. Components or elements corresponding to those of the gasket illustrated in Fig. 8 have been provided with the same reference numerals.

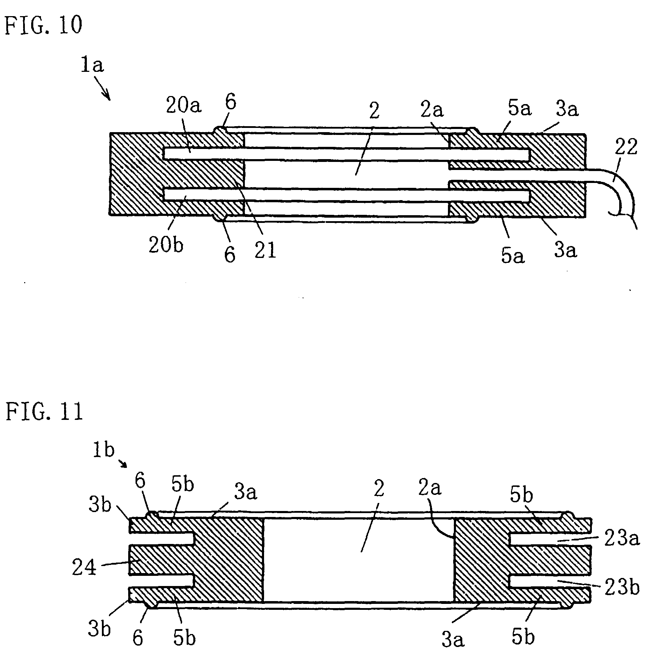

Fig. 10 illustrates a gasket in accordance with the third embodiment. Components or elements corresponding to those of the gasket in accordance with the first embodiment, illustrated in Figs. 1A and 1B, have been provided with the same reference numerals. The gasket in accordance with the third embodiment is different from the gasket in accordance with the first embodiment in having two annular grooves 20a and 20b. The annular grooves 20a and 20b cooperate with the contact surfaces 3a of the gasket body 1a to define the contact portions 5a therebetween. The annular grooves 20a and 20b also define a central portion 21 therebetween.

The annular grooves 20a and 20b are preferably designed to have the same width, and that width is greater than deformation of each One of the contact portions 5a. In the third embodiment, the annular grooves 20a and 20b have the same depth . However, it should be noted that the annular grooves 20a and 20b may have different width and depth in dependence on resiliency of material of which the gasket body 1a is made and deformation of the contact portions 5a.

The gasket body 1a in the third embodiment is designed to have a greater thickness, defined as a length between the contact surfaces 3a, than a thickness of the gasket body 1a of the first embodiment. Hence, as illustrated in Fig. 10, a sampling tube 22 may be formed in the central portion 21 in communication with the through-hole 2 and an externally disposed sampling device (not illustrated). It is possible to take sample fluid through the sampling tube 22 out of fluid flowing through the gasket.

The illustrated gasket is designed to have two annular grooves 20a and 20b, however, it should be noted that three or more annular grooves might be formed.

In accordance with the second embodiment, the annular grooves 20a and 20b may have different width and depth. Accordingly, when flanges made of different materials are fastened with each other through the gasket, the upper and lower contact portions 5a may be designed to have different thickness and length to thereby adjust resilient deformation and a counter-force in dependence on material of which flanges are made.

In addition, even when a space between contact surfaces of flanges to be fastened with each other is relatively long, the gasket doubles as a spacer.

The central portion 21 separates the annular grooves 20a and 20b. Hence, each one of bottoms of the annular grooves 20a and 20b receives only one deflection stress caused by deformation of each one of the contact portions 5a. This enables that each one of the annular grooves 20a and 20b may have a narrower width with the result of greater mechanical strength of the contact portions 5a.

Fig. 11 illustrates a variant of the gasket in accordance with the third embodiment, illustrated in Fig. 10. The illustrated variant is almost the same as the gasket illustrated in Fig. 10, but is different only in that two annular grooves 23a and 23b extend from the side surface 3b of the gasket body 1b towards the through-hole 2. The annular grooves 23a and 23b cooperate with the contact surfaces 3a of the gasket body 1b to define the contact portions 5b therebetween. The annular grooves 23a and 23b also define a central portion 24 therebetween. Components or elements corresponding to those of the gasket illustrated in Fig. 10 have been provided with the same reference numerals. Though not illustrated, a sampling tube may be formed in the central portion 24 in communication with the through-hole 2 and an externally disposed sampling device (not illustrated).

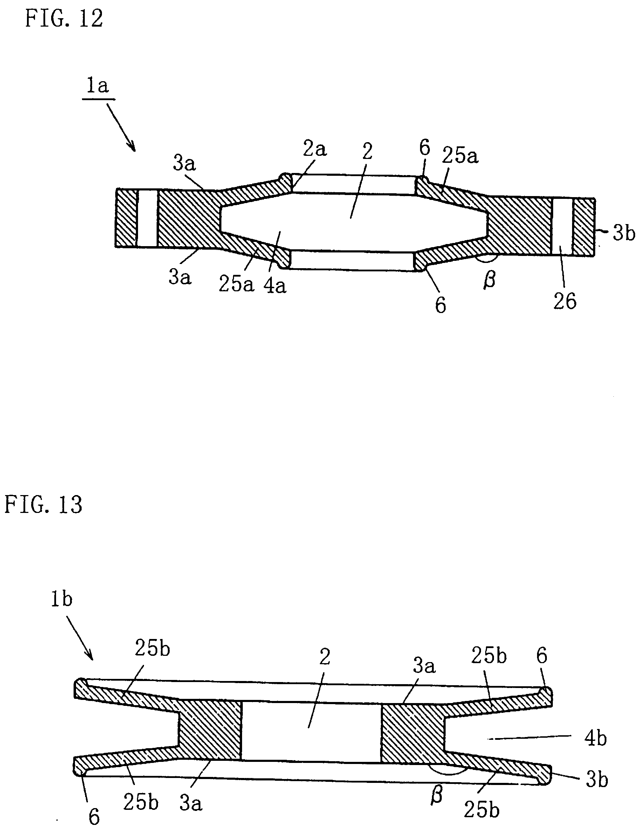

Fig. 12 illustrates a gasket in accordance with the fourth embodiment. Components or elements corresponding to those of the gasket in accordance with the first embodiment, illustrated in Figs. 1A and 1B, have been provided with the same reference numerals. The illustrated gasket is different from the gasket illustrated in Figs. 1A and 1B in that contact portions 25a are inclined so that distal ends of the contact portions 25a are disposed higher than the contact surfaces 3a of the gasket body 1a, and further in that the projections 6 are formed at distal ends of the contact portions 25a. An inclination angle β defined as an angle between the contact surfaces 3a and the contact portions 25a is arranged in the range of 170 degrees to 179.5 degrees both inclusive.

The gasket body 1a is formed outside the through-hole 2 with four through-holes 26 through which bolts (not illustrated) are inserted to fasten two flanges with each other. The four through-holes 26 are circumferentially, equally spaced from one another.

When the gasket in accordance with the fourth embodiment is compressed between two flanges, the contact portions 25a are forced to deform downwardly. Hence, the gasket is sandwiched between flanges with the contact portions 25a horizontally extending, namely, with the contact portions 25a being at the same level as the contact surfaces 3a of the gasket body 1a. Hence, the projections 6 make perpendicular contact with flanges, which ensures more hermetic sealing between the gasket and flanges.

The contact portions 25a may be designed to have chamfered or rounded upper edges, in which case it is no longer necessary to form the projections 6 at the distal ends of the contact portions 25a. The contact portions 25a make contact at the chamfered or rounded upper edges thereof with contact surfaces of flanges.

The gasket body 1a may be formed with an extension beyond the side surface 3b, in which case the through-hole 26 are formed throughout the extension.

Fig. 13 illustrates a variant of the gasket in accordance with the fourth embodiment, illustrated in Fig. 12. The illustrated variant is almost the same as the gasket illustrated in Figs. 2A and 2B, but is different only in that contact portions 25b are inclined so that distal ends of the contact portions 25b are disposed higher than the contact surfaces 3a of the gasket body 1b, and further in that the projections 6 are formed at distal ends of the contact portions 25b. Components or elements corresponding to those of the gasket illustrated in Figs. 2A and 2B have been provided with the same reference numerals. The variant illustrated in Fig. 13 provides the same advantages as those of the gasket illustrated in Fig. 12.

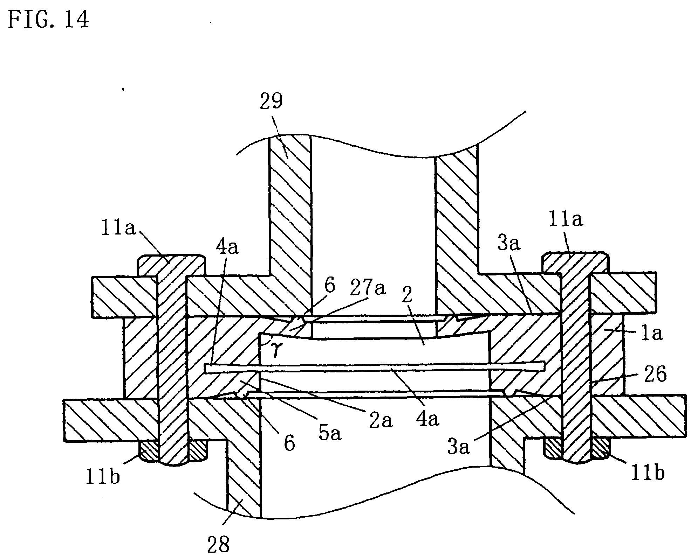

Fig. 14 illustrates a gasket in accordance with the fifth embodiment. Components or elements corresponding to those of the gasket illustrated in Figs. 1A and 1B have been provided with the same reference numerals. The gasket in accordance with the fifth embodiment is employed for connecting two flanges having different diameters with each other.

The illustrated gasket is almost the same as the gasket in accordance with the first embodiment, illustrated in Figs. 1A and 1B, but is different in that an upper contact portion 27a inwardly extends from the inner wall 2a of the through-hole 2 into the through-hole 2.

The illustrated gasket is employed for connecting a first flange 28 to a second flange 29 having a smaller inner diameter than that of the first flange 28. As illustrated in Fig. 14, the through-hole 2 of the gasket body 1a is designed to have an inner diameter equal to that of the first flange 28, and an inner diameter of a circle defined by a distal end of the contact portion 27a is designed to be equal to an inner diameter of the second flange 29.

The gasket body 1a is formed outside the through-hole 2 with a plurality of through-holes 26 through which bolts 11a are inserted for fastening the flanges 28a and 29 with each other in combination of nuts 11b.

In accordance with the fifth embodiment, two flanges having different inner diameters can be fastened with each other in highly hermetic sealing.

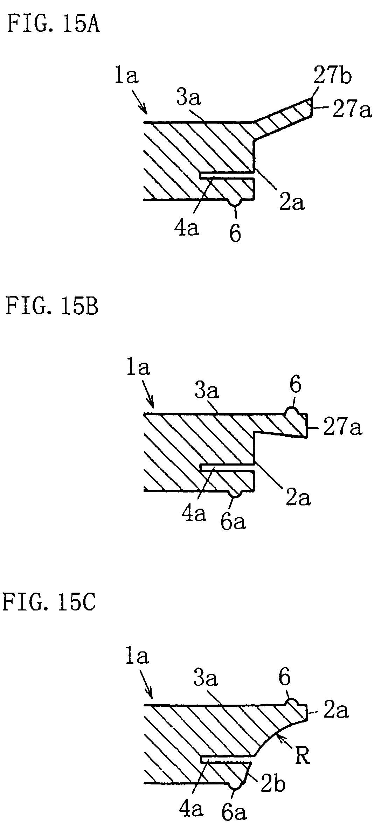

Figs. 15A to 15C illustrate variations of the upper contact portion 27a.

In accordance with the first variant illustrated in Fig. 15A, the contact portion 27a is designed to be upwardly inclined, and to have no projection 6 thereon. Upward inclination of the contact portion 27a compensates for absence of the projection 6. That is, when the gasket body 1a is sandwiched between the flanges 28 and 29, an upper edge 27b of the contact portion 27a makes close contact with a contact surface of the flange 29. The upper edge 27b may be chamfered or rounded.

In accordance with the second variant illustrated in Fig. 15B, the contact portion 27a is designed to have a thickness increasing from a proximal end towards a distal end thereof.

In accordance with the third variant illustrated in Fig. 15C, the through-hole 2 is designed to have an arcuate inner wall 2b having a curvature R. The contact portion 27a is defined by the arcuate inner wall 2b of the through-hole 2. Since the contact portion 27a has a wider proximal end than that of the contact portions 27a illustrated in Figs. 15A and 15B, it is possible to avoid buckling of the contact portion 27a.

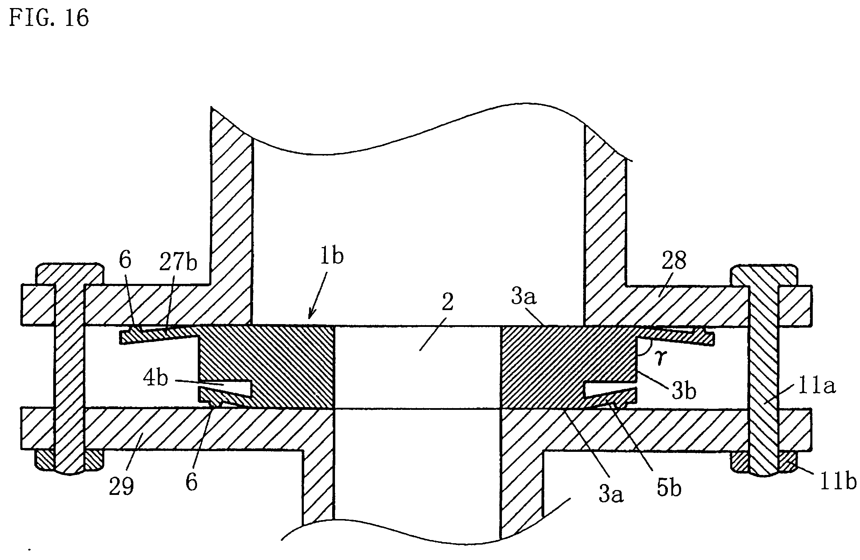

Fig. 16 illustrates a variant of the gasket in accordance with the fifth embodiment, illustrated in Fig. 14. The illustrated gasket is almost the same as the gasket in accordance with the second embodiment, illustrated in Figs. 2A and 2B, but is different in that an upper contact portion 27b outwardly extends from the side surface 3b of the gasket body 1b. Components or elements corresponding to those of the gasket illustrated in Figs. 2A and 2B have been provided with the same reference numerals. The variant illustrated in Fig. 16 provides the same advantages as those of the gasket illustrated in Fig. 14. Namely, in accordance with the illustrated variant, the two flanges 28 and 29 having different inner diameters can be fastened with each other in highly hermetic sealing.

The upper contact portion 27b may be designed to have the same shape as those of the variants of the upper contact portion 27a illustrated in Figs. 15A to 15C.

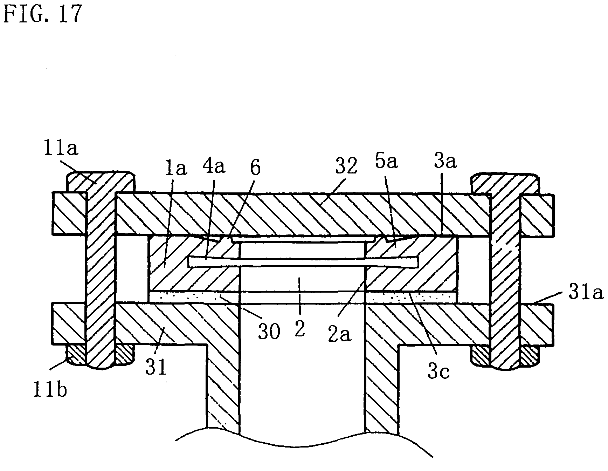

Fig. 17 illustrates a gasket in accordance with the sixth embodiment. Components or elements corresponding to those of the gasket illustrated in Figs. 1A and 1B have been provided with the same reference numerals. The gasket in accordance with the sixth embodiment is employed in combination with a packing.

The illustrated gasket is almost the same as the gasket in accordance with the first embodiment, illustrated in Figs. 1A and 1B, but is different in that the projection 6 is formed only on the upper contact portion 5a. A lower surface 3c of the gasket body 1a is formed flat.

The gasket in accordance with the sixth embodiment is set between flanges as follows. As illustrated in Fig. 17, a packing 30 is first placed on a contact surface 31a of a flange 31. Then, the gasket is placed on the packing 30 so that the flat lower surface 3c makes contact with the packing 30. Then, a blind flange 32 is placed on the gasket. Then, the flanges 31 and 32 are fastened with each other by mean of bolts 11a and nuts 11b. Thus, the gasket is sandwiched between the flanges 31 and 32 with the packing 30 being sandwiched between the flange 31 and the flat lower surface 3c of the gasket body 1a.

The gasket in accordance with the sixth embodiment may be employed in combination with a conventional packing.

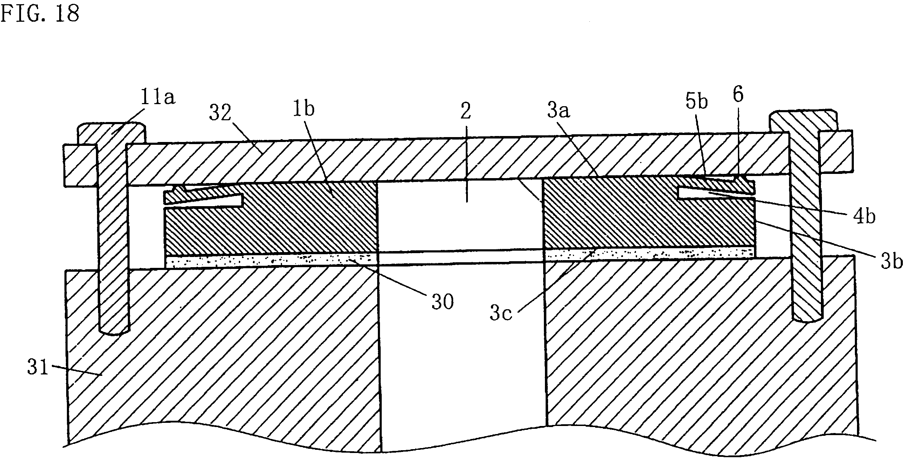

Fig. 18 illustrates a variant of the sixth embodiment. A gasket in accordance with the illustrated variant is almost the same as the gasket illustrated in Figs. 2A and 2B, but is different in that the projection 6 is formed only on the upper contact portion 5b. A lower surface 3c of the gasket body 1b is formed flat. The use of the variant is the same as that of the gasket illustrated in Fig. 17.

## Claims

1. A gasket comprising a gasket body (1a, 1b) having a uniform thickness and opposite contact surfaces (3a, 3c),
the gasket body (1a, 1b) being formed axially thereof with a through-hole (2),
the gasket body (1a, 1b) being formed with at least one annular groove (4a, 4b, 18a, 19a, 20a, 20b, 23a, 23b) to thereby define at least one contact portion (5a, 5b, 25a, 25b, 27a, 27b) between the annular groove (4a, 4b, 18a, 19a, 20a, 20b, 23a, 23b) and the opposite contact surfaces (3a), the annular groove (4a, 4b, 18a, 19a, 20a, 20b, 23a, 23b) extending from an inner wall (2a) of the through-hole (2) towards a side surface (3b) of the gasket body (1a, 1b) or extending from the side surface (3b) towards the inner wall (2a) of the through-hole (2),
at least one projection (6, 6a) being formed on at least one of the opposite contact surfaces (3a) above the annular groove (4a, 4b, 18a, 19a, 20a, 20b, 23a, 23b), the projection (6, 6a) entirely surrounding the through-hole (2).

2. The gasket as set forth in claim 1, wherein the gasket body (1a, 1b) is formed with two contact portions (5a, 5b, 25a, 25b, 27a, 27b), one (27a, 27b) of which inwardly extends from the inner wall (2a) of the through-hole (2) or outwardly extends from the side surface (3b).

3. The gasket as set forth in any one of the preceding claims, wherein the gasket body (1a, 1b) is ring-shaped.

4. The gasket as set forth in any one of the preceding claims, wherein the projection (6, 6a) is an annular projection coaxial with the through-hole (2).

5. The gasket as set forth in any one of the preceding claims, wherein the projection (6, 6a) has a semicircular cross-section.

6. The gasket as set forth in any one of the preceding claims, wherein the contact portion (5a, 5b, 25a, 25b, 27a, 27b) has an increasing or decreasing thickness from the through-hole (2a) towards the side surface (3b).

7. The gasket as set forth in any one of the preceding claims, wherein the gasket body is formed further with a passage (22) by which the through-hole (2a) is in fluid communication with the side surface (3b) of the gasket body (1a, 1b).

8. The gasket as set forth in any one of the preceding claims, wherein the annular groove (4a, 4b, 18a, 19a, 20a, 20b, 23a, 23b) is tapered so that the annular groove (4a, 4b, 18a, 19a, 20a, 20b, 23a, 23b) has an increasing or decreasing width from the through-hole (2a) towards the side surface (3b) of the gasket body (1a, 1b).

9. The gasket as set forth in claim 8, wherein the annular groove (4a, 4b, 18a, 19a, 20a, 20b, 23a, 23b) has a rounded bottom.

10. The gasket as set forth in any one of the preceding claims, wherein the gasket body (1a, 1b) is formed with a plurality of projections (6, 6a) so that a projection (6) disposed closer to the through-hole (2) has a greater or smaller height.

11. The gasket as set forth in any one of claims 2 to 10, wherein the one (27a, 27b) of contact portions is designed to be upwardly inclined.

12. The gasket as set forth in any one of claims 2 to 11, wherein the one of contact portions (27a, 27b) has an increasing or decreasing thickness.

13. The gasket as set forth in any one of claims 2 to 12, wherein the through-hole (2) has an arcuate inner wall to define the one of contact portions (27a, 27b).

14. A gasket comprising a gasket body (1a, 1b) having a uniform thickness and opposite contact surfaces (3a),
the gasket body (1a, 1b) being formed axially thereof with a through-hole (2),
the gasket body (1a, 1b) being formed with at least one annular groove (4a, 4b, 18a, 19a, 20a, 20b, 23a, 23b) to thereby define at least one contact portion (5a, 5b, 25a, 25b, 27a, 27b) between the annular grove (4a, 4b, 18a, 19a, 20a, 20b, 23a, 23b) and the opposite contact surfaces (3a), the annular groove (4a, 4b, 18a, 19a, 20a, 20b, 23a, 23b) extending from an inner wall (2a) of the through-hole (2) towards a side surface (3b) of the gasket body (1a, 1b) or extending from the side surface (3b) towards the inner wall (2a) of the through-hole (2),
the contact portion (5a, 5b, 25a, 25b, 27a, 27b) having a rounded or chamfered upper edge.

15. A gasket comprising a gasket body (1a, 1b) having a uniform thickness and opposite contact surfaces (3a),
the gasket body (1a, 1b) being formed axially thereof with a through-hole (2),
the gasket body (1a, 1b) being formed with at least one annular groove (4a, 4b, 18a, 19a, 20a, 20b, 23a, 23b) to thereby define at least one contact portion (5a, 5b, 25a, 25b, 27a, 27b) between the annular groove (4a, 4b, 18a, 19a, 20a, 20b, 23a, 23b) and the opposite contact surfaces (3a), the annular groove (4a, 4b, 18a, 19a, 20a, 20b, 23a, 23b) extending from an inner wall (2a) of the through-hole (2) towards a side surface (3b) of the gasket body (1a, 1b) or extending from the side surface (3b) towards the inner wall (2a) of the through-hole (2),
the contact portion (5a, 5b, 25a, 25b, 27a, 27b) being inclined so that a distal end thereof is disposed higher than the opposite contact surfaces (3a).

16. The gasket as set forth in any one of claims 14 or 15, wherein at least one projection (6, 6a) is formed on at least one of the opposite contact surfaces (3a) above the annular groove (4a, 4b, 18a, 19a, 20a, 20b, 23a, 23b), the projection (6, 6a) entirely surrounding the through-hole (2).

17. The gasket as set forth in claim 15, wherein the contact portion (5a, 5b, 25a, 25b, 27a, 27b) has a rounded or chamfered upper edge.

18. The gasket as set forth in any one of claims 14 to 17, wherein the gasket body (1a, 1b) is ring-shaped.

19. The gasket as set forth in any one of claims 16 to 18, wherein the projection (6, 6a) is an annular projection coaxial with the through-hole (2).

20. The gasket as set forth in claim 19, wherein the annular projection (6, 6a) is formed at a distal end of the contact portion (5a, 5b, 25a, 25b, 27a, 27b).

21. The gasket as set forth in any one of claims 16 to 20, wherein the projection (6, 6a) has a semicircular cross-section.

22. The gasket as set forth in any one of claims 14 to 21, wherein the contact portion (5a, 5b, 25a, 25b, 27a, 27b) has an increasing or decreasing thickness from the through-hole (2) towards the side surface (3b).

23. The gasket as set forth in any one of claims 14 to 22, wherein the gasket body (1a, 1b) is formed further with a passage (22) by which the through-hole (2) is in fluid communication with the side surface (3b) of the gasket body (1a, 1b).

24. The gasket as set forth in any one of claims 14 to 23, wherein the gasket body (1a, 1b) is formed with a plurality of projections (6, 6a) so that a projection (6) disposed closer to the through-hole (2) has a greater or smaller height.
